# FASCICULE DE BREVET EUROPEEN

(11) **EP 1 196 070 B1**
(45) Date de publication et mention de la délivrance du brevet: **09.07.2003**
(21) Numéro de dépôt: 99973960.0
(22) Date de dépôt: 08.10.1999
(51) Int. Cl.: A47J 36/02, H05B 6/12

(54) **RECIPIENT CULINAIRE A CHAUFFAGE PAR INDUCTION**
INDUKTIONSHERDGEEIGNETES KOCHGEFÄSS
INDUCTION HEATED COOKING VESSEL

(30) Priorité: 07.07.1999 FR 9908759
(43) Date de publication de la demande: 17.04.2002
(73) Titulaire: LES FONDERIES FRANCO-BELGES, 59660 Merville (FR)
(72) Inventeur: LABBE, Jean-Claude, F-87000 Limoges (FR); COUDERT, Valérie, F-87110 Le Vigen (FR); GREBAUX, Jean-Pierre, F-59250 Halluin (FR)
(74) Mandataire: Casalonga, Axel
(86) Numéro de dépôt international: FR9902420
(87) Numéro de publication internationale: WO01003557

(56) Documents cités:
- EP-A- 0 580 097
- US-A- 4 544 818
- US-A- 5 486 382
- US-A- 5 770 837

## Description

La présente invention concerne d'une manière générale un récipient culinaire à chauffage par induction et plus particulièrement un récipient en fonte d'aluminium adapté pour la cuisson par induction.

Pour subir un chauffage par induction, un récipient culinaire doit présenter des caractéristiques de résistance électrique spécifiques.

Tout d'abord, la résistance électrique du matériau du récipient ne doit pas être trop forte, faute de quoi les courants induits inférieurs à une intensité minimale Iₘᵢₙ ne circuleraient pas ou insuffisamment pour assurer un chauffage approprié du récipient.

Cependant, cette résistance électrique ne doit pas être trop faible au point que les courants induits dans le récipient où une partie du récipient dépassent une valeur maximale Iₘₐₓ admissible sans détérioration de l'inducteur et que la sécurité dans le circuit intervienne alors pour couper l'alimentation de l'inducteur.

En conséquence, il convient donc d'ajuster les propriétés électriques du matériau du récipient ou de la partie du récipient où circulent les courants induits de façon à maintenir les courants induits entre ces valeurs extrêmes pour un bon fonctionnement du récipient.

Les récipients culinaires en fonte d'aluminium classiques ne conviennent pas pour le chauffage par induction. En effet, la résistivité de la fonte d'aluminium est faible. Ainsi, une poêle en fonte d'aluminium ayant un fond d'un diamètre de 15 cm et une épaisseur de 5 mm présente une résistance voisine de 0,27 10⁻³ Ohms, valeur inadéquate pour provoquer par elle-même un couplage avec l'inducteur.

Pour rendre ces récipients en fonte d'aluminium utilisables pour le chauffage par induction, on a proposé d'incorporer dans la plaque de fond des récipients des éléments en matériau magnétique. Une telle solution est décrite entre autres dans les documents FR 2 718 936, GB 2 288 722 et EP 0 677 264. L'adjonction d'éléments en matériau magnétique à la plaque de fond d'un récipient culinaire est difficile et coûteuse à réaliser.

En outre, cette technique ne permet pas d'adapter aisément la valeur de la résistance électrique ainsi créée.

Le document FR 2 717 062 décrit un procédé pour prolonger la durée de vie d'un ustensile de cuisson en aluminium ou comportant un fond en aluminium et pour permettre leur utilisation sur une plaque de cuisson à induction qui consiste à revêtir la surface extérieure du fond d'une couche d'un alliage plus dur que l'aluminium par projection de gouttelettes d'un métal ou d'un alliage ferromagnétique en fusion. L'emploi d'un métal ou d'un alliage ferromagnétique en fusion déposé par pulvérisation rend difficile le réglage des propriétés électriques du récipient et en particulier la valeur de la résistance électrique.

Pour rendre aptes à un chauffage par induction de tels récipients culinaires en fonte d'aluminium, on a encore proposé de revêtir une surface du récipient, de préférence le fond, d'une couche électroconductrice constituée par des grains de métal ou d'alliage électroconducteur choisi parmi le fer, les alliages à base de fer et leurs mélanges, par un matériau céramique choisi parmi les oxydes métalliques et leurs mélanges.

Parmi les alliages à base de fer convenant pour la réalisation de la couche de cermet, on peut citer les alliages fer-chrome, fer-chrome-cuivre et fer-aluminium-silicium. Un alliage préféré est l'alliage fer-silicium-aluminium (FeSiAl).

A titre d'exemple des alliages électroconducteurs convenables, on peut citer l'alliage FeSiAl commercialisé par la Société HÖGANAS et l'alliage 87 Fe-13 Cr.

Dans les mélanges, le métal ou l'alliage électriquement conducteur représente de 60 à 90%, de préférence 75 à 85% et généralement de l'ordre de 80% en poids du cermet, cependant que la céramique représente de 40 à 10%, de préférence 25 à 15% et généralement 20% en poids du cermet.

Les oxydes métalliques sont de préférence Al₂O₃, TiO₂, Fe₂O₃ et leurs mélanges. Parmi ces oxydes, les oxydes recommandés sont Al₂O₃, Fe₂O₃ et les mélanges Al₂O₃/TiO₂.

La couche électroconductrice a en général une épaisseur comprise entre 300 et 900 µm.

Bien que les récipients culinaires pour chauffage par induction décrit ci-dessus s'avèrent satisfaisants, ils présentent toutefois un certain nombres d'inconvénients.

Tout d'abord, le fer et ses alliages cités sont très sensibles à l'oxydation et même si on recouvre les couches de cermet avec un émail, ces couches se détériorent rapidement sous l'effet de l'oxydation.

En outre, pour un bon couplage inductif, la couche de cermet doit être relativement épaisse, de l'ordre de 650 à 800 µm, ce qui entraîne des problèmes d'homogénéité et d'adhérence de la couche à la surface du récipient culinaire et accroît les coûts de fabrication.

L'invention a donc pour objet de réaliser un récipient culinaire pour chauffage par induction, qui remédie aux inconvénients des récipients de l'art antérieur.

Selon l'invention, on réalise un récipient culinaire à chauffage par induction, de préférence en fonte d'aluminium, dont une surface est revêtue d'une couche électroconductrice d'un cermet constitué par des grains de métal ou d'alliage électroconducteur choisi parmi le fer, les alliages à base de fer et leurs mélanges, enrobés par un matériau céramique choisi parmi les oxydes métalliques et leurs mélanges, caractérisé par le fait que la couche de cermet est elle-même revêtue par une couche de protection en bronze.

Pour la couche électroconductrice de cermet du récipient selon l'invention, on peut utiliser les cermets décrits précédemment.

Les cermets préférés selon l'invention sont les cermets Fe/Al₂O₃ et alliage de fer/Al₂O₃.

Parmi les alliages de fer préférés, on peut citer les fontes et les alliages FeSiAl.

Comme cela est bien connu, les fontes sont des alliages dont les composants essentiels sont le fer et le carbone.

De préférence, le cermet comprend 70 à 90% en poids de fer, fonte ou alliage de fer et 10 à 30% d'alumine.

La couche de cermet peut être déposée par tout procédé connu et en particulier par projection thermique avec un pistolet à poudre et le matériel de distribution de poudre classiques disponibles dans le commerce.

En général, la couche de cermet déposée a une épaisseur de 300 à 900 µm et de préférence de 300 à 600 µm.

Après mécanofusion, la granulométrie du cermet est de 20 µm à 150 µm. Cette granulométrie peut être aisément déterminée par tamissage.

On peut utiliser pour la couche de protection en bronzé tout bronze du commerce. Comme cela est bien connu, les bronzes sont des alliages dont le constituant principal est le cuivre.

Les bronzes préférés selon l'invention sont les bronzes CuAl, en particulier comprenant au moins 80% Cu et au moins 5% Al, en poids.

Les bronzes préférés contiennent, en poids, 80 à 95% Cu et 5 à 20% Al.

En général, l'épaisseur de la couche de bronze est de 100 à 400 µm, de préférence de 100 à 200 µm, et typiquement de 150 µm.

La couche de bronze peut être déposée par tout procédé connu et en particulier de la même manière que la couche de cermet, par exemple par projection thermique avec un pistolet à poudre et le matériel de distribution de poudre classiques disponibles dans le commerce.

La granulométrie de la couche de bronze est de 20 à 150 µm.

Les expérimentations ont montré qu'en utilisant la couche de protection supplémentaire en bronze, on pouvait obtenir non seulement une protection de la couche de cermet vis-à-vis de l'oxydation, mais qu'il était alors possible de réduire l'épaisseur de la couche de cermet (300-600 µm) sans nuire au couplage inductif du récipient.

De préférence, la surface extérieure du récipient de cuisson revêtue avec les couches de cermet et de bronze est la surface extérieure du fond du récipient.

Comme cela est bien connu, la surface extérieure du fond d'un récipient de cuisson présente une légère concavité pour accomoder les déformations thermiques. En outre, de préférence, la surface extérieure du fond comporte une zone centrale en creux, ce qui évite une surépaisseur des couches de cermet et de bronze dans cette zone centrale de la surface extérieure de fond du récipient et un risque de décollement des couches.

Egalement, de préférence, la couche de cermet est déposée de manière à laisser apparente une zone périphérique annulaire de la surface extérieure de fond du récipient de sorte que la couche de protection en bronze recouvre également latéralement la couche de cermet pour éviter une oxydation latérale de celle-ci. Cette zone périphérique apparente peut être obtenue par exemple par l'emploi d'un cache approprié lors du dépôt de la couche de cermet et qui est retiré avant le dépôt de la couche de protection en bronze.

En variante, le fond du récipient peut être réalisé avec un redent périphérique, et la couche de cermet déposée sur la surface extérieure du fond jusqu'au redent périphérique, cependant que la couche de protection en bronze est elle déposée de manière à également recouvrir le redent.

Comme cela est classique, la surface intérieure du récipient peut être revêtue d'une couche d'un matériau anti-adhérent classique telle qu'une couche de polytétrafluoroéthylène. L'application des couches de cermet et de protection en bronze ne détériore pas cette couche anti-adhérente.

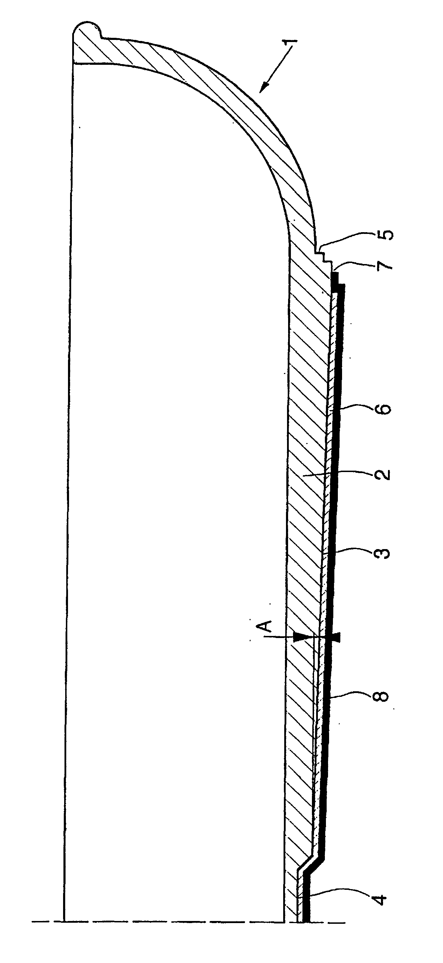

La suite de la description se réfère à la figure annexée, qui représente une vue en coupe d'une moitié d'un récipient de cuisson selon l'invention.

Sur la figure, on a représenté un récipient de cuisson à chauffage par induction 1, par exemple en fonte d'aluminium, comportant un fond 2 dont la surface extérieure 3 présente une légère concavité comme indiqué en A. La surface extérieure 3 du fond 2 comporte en outre une zone centrale en creux 4. Enfin, le bord périphérique du fond est pourvu d'un redent 5.

Selon l'invention, on a déposé sur la surface extérieure 3 du fond 2 du récipient une couche de cermet 6, par exemple en fonte/Al₂O₃, qui, comme le montre la figure, laisse apparente une zone périphérique annulaire 7 de la surface extérieure 3.

La couche de cermet 6 est elle-même recouverte d'une couche de protection en bronze 8 qui, comme on le voit, recouvre la totalité de la couche de cermet, y compris sur l'épaisseur, et au moins une partie de la zone périphérique annulaire 7.

### EXEMPLE

On a réalisé avec les conditions indiquées ci-après, un récipient de cuisson par induction selon l'invention, comme décrit ci-dessus, en liaison avec la figure et ayant les caractéristiques suivantes.

### Récipient

Fonte d'aluminium: AS12 (13,5 Si - 2 Fe - 0,6 Cu - 4 Mn - 11 Mg - 0,35 Cr - 3 Ni - 0,25 Zn - 0,20 Sb - 0,10 Sn - 0,20 Sn - 0,30 Zr - 0,30 Ti.
Autres éléments : 0,05 chacun et 0,15 au total.
Pourcentages exprimés en poids).
Diamètre du récipient : 24 cm
Epaisseur du fond : 6-7 mm

### Couche de cermet

Composition du cermet : Fe 90% - Al₂O₃ 10%
Diamètre de la couche : 17 cm
Epaisseur de la couche : 320 µm

La couche de cermet a été déposée sur le fond du récipient préchauffé par pulvérisation thermique au pistolet à poudre.

### Appareillage : 6P2 SULZER-METCO

### Couche de bronze

Composition du bronze : 1 Fe - 9,5 Al - 89,5 cm
Diamètre de la couche : 17,3 cm
Epaisseur de la couche : 100 µm

La couche de bronze a été déposée sur la couche de cermet avec le même appareillage que précédemment.

On a soumis le récipient selon l'invention ci-dessus et à titre comparatif, un récipient identique mais sans couche de protection en bronze, à un essai de chauffage d'huile.

On a placé dans le récipient ci-dessus 350 g d'une huile de silicone ayant une viscosité de 50 à 125.10⁻⁴ m²/s et chauffé le récipient avec une table à induction classique.

Initialement, l'huile est à 20°C et on mesure à l'aide d'un thermocouple situé au demi-rayon du récipient et à mi-hauteur d'huile, l'élévation de température de l'huile de 20°C et 160°C. On détermine alors le temps nécessaire à ces élévations, de la température d'huile.

On procède de manière semblable avec un récipient muni seulement d'une couche de cermet identique à la précédente.

Les résultats sont donnés dans le tableau ci-dessous :

| | Elévation ou température | Temps |
|---|---|---|
| Cermet seul | + 20°C | 1' |
| | + 160°C | 6'15" |
| Cermet + couche de protection | | |
| en bronze | + 20°C | 50" |
| | + 160°C | 3'15" |

L'essai montre que le récipient selon l'invention présente une vitesse de montée en température nettement supérieure à un récipient analogue muni seulement d'un couche de cermet.

## Revendications

1. Récipient culinaire à chauffage par induction, dont au moins une surface du récipient est revêtue d'une couche électroconductrice d'un cermet constitué par des grains d'un métal ou d'un alliage électroconducteur choisi parmi le fer, les alliages à base de fer et leurs mélanges, enrobés par un matériau céramique choisi parmi les oxydes métalliques et leurs mélanges, **caractérisé en ce que** la couche électroconductrice de cermet est revêtue d'une couche de protection en bronze.

2. Récipient selon la revendication 1, **caractérisé en ce que** les alliages à base de fer sont choisis parmi les fontes, les alliages fer-chrome, fer-chrome-cuivre et fer-silicium-aluminium.

3. Récipient selon la revendication 1 ou 2, **caractérisé en ce que** les oxydes métalliques sont choisis parmi Al₂O₃, TiO₂, Fe₂O₃ et leurs mélanges.

4. Récipient selon la revendication 3, **caractérisé en ce que** les oxydes métalliques sont choisis parmi Al₂O₃, Fe₂O₃ et les mélanges Al₂O₃/TiO₂.

5. Récipient selon l'une quelconque des revendications 1 à 4, **caractérisé en ce que** dans le cermet l'alliage électroconducteur représente 70 à 90% en poids du cermet et la céramique 10 à 30% en poids du cermet.

6. Récipient selon la revendication 5, **caractérisé en ce que** l'alliage électroconducteur est une fonte et la céramique l'alumine Al₂O₃.

7. Récipient selon l'une quelconque des revendications 1 à 6, **caractérisé en ce que** la couche électroconductrice a une épaisseur comprise entre 300 et 900 µm, de préférence 400 à 600 µm.

8. Récipient selon l'une quelconque des revendications 1 à 7, **caractérisé en ce que** le bronze de la couche de protection comprend au moins 80% en poids de cuivre et au moins 5% en poids d'aluminium.

9. Récipient selon la revendication 8, **caractérisé en ce que** le bronze de la couche de protection comprend 80 à 95% en poids de cuivre et 5 à 20% en poids d'aluminium.

10. Récipient selon l'une quelconque des revendications 1 à 9, **caractérisé en ce que** la couche de protection en bronze a une épaisseur de 100 à 400 µm, de préférence 100 à 200 µm.

11. Récipient selon l'une quelconque des revendications 1 à 10, **caractérisé en ce que** les couches de cermet et de protection sont déposées sur une surface externe du récipient.

12. Récipient selon la revendication 11, **caractérisé en ce que** la surface externe est la surface externe du fond du récipient.

13. Récipient selon la revendication 12, **caractérisé en ce que** la surface externe du récipient comprend une zone centrale en creux.

14. Récipient selon l'une des revendications 12 ou 13, **caractérisé en ce que** le fond du récipient comprend un redent périphérique et **en ce que** la couche de cermet s'étend jusqu'au redent et la couche de protection en bronze recouvre le redent.

15. Récipient selon l'une quelconque des revendications précédentes, **caractérisé en ce qu'**il est en fonte d'aluminium.

## Patentansprüche

1. Induktionsherdgeeignetes Kochgefäß, wobei mindestens eine Oberfläche des Gefäßes mit einer elektrisch leitenden Schicht aus einem Cermet, das von Körnern eines Metalls oder einer elektrisch leitenden Legierung, das bzw. die aus Eisen, Legierungen auf Eisenbasis und deren Gemischen ausgewählt ist, die von einem Keramikmaterial, das aus den Metalloxiden und deren Gemischen ausgewählt ist, umgeben sind, gebildet wird, überzogen ist, **dadurch gekennzeichnet, dass** die elektrisch leitende Schicht aus Cermet mit einer Schutzschicht aus Bronze überzogen ist.

2. Gefäß nach Anspruch 1, **dadurch gekennzeichnet, dass** die Legierungen auf Eisenbasis aus Gusseisen, Eisen-Chrom-, Eisen-Chrom-Kupfer- und Eisen-Silicium-Aluminium-Legierungen ausgewählt sind.

3. Gefäß nach Anspruch 1 oder 2, **dadurch gekennzeichnet, dass** die Metalloxide aus Al₂O₃, TiO₂, Fe₂O₃ und deren Gemischen ausgewählt sind.

4. Gefäß nach Anspruch 3, **dadurch gekennzeichnet, dass** die Metalloxide aus Al₂O₃, Fe₂O₃ und den Gemischen Al₂O₃/TiO₂ ausgewählt sind.

5. Gefäß nach einem der Ansprüche 1 bis 4, **dadurch gekennzeichnet, dass** in dem Cermet die elektrisch leitende Legierung 70-90 Gew.-% des Cermet und die Keramik 10-30 Gew.-% des Cermet ausmacht.

6. Gefäß nach Anspruch 5, **dadurch gekennzeichnet, dass** die elektrisch leitende Legierung ein Gusseisen ist und die Keramik Aluminiumoxid Al₂O₃ ist.

7. Gefäß nach einem der Ansprüche 1 bis 6, **dadurch gekennzeichnet, dass** die elektrisch leitende Schicht eine Dicke zwischen 300 und 900 µm, vorzugsweise von 400 bis 600 µm, aufweist.

8. Gefäß nach einem der Ansprüche 1 bis 7, **dadurch gekennzeichnet, dass** die Bronze der Schutzschicht mindestens 80 Gew.-% Kupfer und mindestens 5 Gew.-% Aluminium umfasst.

9. Gefäß nach Anspruch 8, **dadurch gekennzeichnet, dass** die Bronze der Schutzschicht 80 bis 95 Gew.-% Kupfer und 5 bis 20 Gew.-% Aluminium umfasst.

10. Gefäß nach einem der Ansprüche 1 bis 9, **dadurch gekennzeichnet, dass** die Schutzschicht aus Bronze eine Dicke von 100 bis 400 µm, vorzugsweise von 100 bis 200 µm, aufweist.

11. Gefäß nach einem der Ansprüche 1 bis 10, **dadurch gekennzeichnet, dass** die Cermetschicht und die Schutzschicht auf einer Außenoberfläche des Gefäßes abgelagert sind.

12. Gefäß nach Anspruch 11, **dadurch gekennzeichnet, dass** die Außenoberfläche die Außenoberfläche des Bodens des Gefäßes ist.

13. Gefäß nach Anspruch 12, **dadurch gekennzeichnet, dass** die Außenoberfläche des Gefäßes eine hohle zentrale Zone umfasst.

14. Gefäß nach einem der Ansprüche 12 oder 13, **dadurch gekennzeichnet, dass** der Boden des Gefäßes eine Umfangsauszackungsstufe umfasst und dass sich die Cermetschicht bis zur Auszackungsstufe erstreckt und die Schutzschicht aus Bronze die Auszackungsstufe bedeckt.

15. Gefäß nach einem der vorhergehenden Ansprüche, **dadurch gekennzeichnet, dass** es aus Aluminiumguss ist.

## Claims

1. An induction-heating cooking vessel, at least one surface of which is coated with an electrically conductive layer of a cermet consisting of particles of an electrically conductive metal or alloy chosen from iron, iron-based alloys and mixtures thereof, these being encapsulated by a ceramic chosen from metal oxides and mixtures thereof, **characterized in that** the electrically conductive cermet layer is itself coated with a protective bronze layer.

2. The vessel as claimed in claim 1, **characterized in that** the iron-based alloys are chosen from cast irons, iron-chromium, iron-chromium-copper and iron-silicon-aluminum alloys.

3. The vessel as claimed in claim 1 or 2, **characterized in that** the metal oxides are chosen from Al₂O₃, TiO₂, Fe₂O₃ and mixtures thereof.

4. The vessel as claimed in claim 3, **characterized in that** the metal oxides are chosen from Al₂O₃, Fe₂O₃ and Al₂O₃/TiO₂ mixtures.

5. The vessel as claimed in any one of claims 1 to 4, **characterized in that** the in the cermet the electrically conductive alloy represents 70 to 90% by weight of the cermet and the ceramic 10 to 30% by weight of the cermet.

6. The vessel as claimed in claim 5, **characterized in that** the electrically conductive alloy is a cast iron and the ceramic is alumina Al₂O₃.

7. The vessel as claimed in any one of claims 1 to 6, **characterized in that** the electrically conductive layer has a thickness of between 300 and 900 µm, preferably 400 to 600 µm.

8. The vessel as claimed in any one of claims 1 to 7, **characterized in that** the bronze of the protective layer comprises at least 80% by weight of copper and at least 5% by weight of aluminum.

9. The vessel as claimed in claim 8, **characterized in that** the bronze of the protective layer comprises 80 to 95% by weight of copper and 5 to 20% by weight of aluminum.

10. The vessel as claimed in any one of claims 1 to 9, **characterized in that** the protective bronze layer has a thickness of 100 to 400 µm, preferably 100 to 200 µm.

11. The vessel as claimed in any one of claims 1 to 10, **characterized in that** the cermet and protective layers are deposited on an external surface of the vessel.

12. The vessel as claimed in claim 11, **characterized in that** the external surface is the external surface of the base of the vessel.

13. The vessel as claimed in claim 12, **characterized in that** the external surface of the vessel includes a central recessed region.

14. The vessel as claimed in either of claims 12 and 13, **characterized in that** the base of the vessel includes a peripheral step and **in that** the cermet layer extends as far as the step and the protective bronze layer covers the step.

15. The vessel as claimed in any one of the preceding claims, **characterized in that** it is made of cast aluminum.
